# EUROPEAN PATENT APPLICATION

(11) **EP 1 965 471 A2**
(43) Date of publication of application: **03.09.2008**
(21) Application number: 08425133.9
(22) Date of filing: 03.03.2008
(51) Int. Cl.: H01R 13/502, H01R 13/52, H01R 13/639, H01R 13/70

(54) **Waterproof enclosure for electric devices**

(30) Priority: 01.03.2007 IT BS20070012 U
(71) Applicant: AVE S.p.A., 25086 Brescia (IT)
(72) Inventor: Belli, Alessandro,, 25086 Rezzato (Brescia) (IT)
(74) Representative: Sangiacomo, Fulvia

(57) **Abstract**

This invention concerns a seal-tight box for installing electric devices that comprises a box shaped body (11) closed at the front by a cover (13). Between the body (11) and cover (13) there is at least an opening (19) for the passage of an electric cable equipped with elastomer sealing elements (19') and an auxiliary sealing element (20) acting as a mechanical barrier, oriented and moving perpendicular to said opening (19). The box can also be equipped with a switch (24) to interrupt the electric current to the internal device on the opening of the cover (13), and with a lock (26) to unauthorised opening of the front cover.

## Description

This invention concerns the command, control, socket and similar electric devices, and in particular regards a support box for the installation of electric devices, which comprises a base body or container designed to house and enclose at least one electric device and closed at the front by a cover and which, in the case of some external installations must be sealed to protect the devices it houses from atmospheric agents, humidity, dust, etc.

In a previous application for a utility model by the same applicant a protective box for electric devices of the type taken into consideration herein was described wherein the cover: is hinged to the container or base body; is turning between an open position and a closed position respectively to allow and prevent access to the inside of said body; and it is equipped with means suitable to define and establish its open position, a flexible means supporting its return to the closed position and means of blocking to keep it closed on the front of the base body. The blocking means are made up of bolts positioned on opposite sides of the base body, which can be operated like pushbuttons and engage with corresponding recesses provided in the cover. Between the base body and the cover there is a seal acting as a frame and furthermore, in particular from the opposite side to the one with the hinge that connects them, they form an opening for the passage of a cable, that could be the one required by a plug to connect up to a socket installed in the box.

Then, level with this opening, the body and the cover have two facing elastomer elements provided to close said opening when there is no cable and to close around the cable when present, to provide a seal at that level as well.

Such a protective box for electric equipment was however found to be susceptible to implementation in some of its sealing, functional and safety aspects.

The seal level with the opening for the passage of the cable can cause problems when there is no cable and/or due to some deformations of the elastomer elements.

One of the objectives of this invention is to provide a remedy for this problem by equipping the protective box with an auxiliary sealing element.

It may be also an advantage to disconnect the current to the electric device installed in the box when the front cover is open and/or when, for example in the case of a plug, the socket it is connected to is pulled out.

Another objective of this invention is to provide a protective box for electric devices like the abovementioned one including means for automatically switching off the feed current when the cover is opened and/or on disconnecting the plug that connects up to the socket.

It is also believed to be advantageous to block the cover when closed so as to prevent any unintentional and/or unauthorised opening.

A further objective of this invention is therefore to provide a protective box for electric devices of the abovementioned type including an additional blocking system in safety, which can only be disconnected on purpose and by using the appropriate key to unlock it.

These objectives and implicit advantages deriving from them are achieved with a protective box for electric devices according to at least claim 1.

This invention will however be illustrated in greater detail in the following description made with reference to the enclosed drawings, in which:
Fig. 1 shows the protective box open in association with a built-in container.
Fig. 2 shows a cross section of the protective box in Fig. 1;
Fig. 3 shows an enlarged view of detail B circled in Fig. 2;
Fig. 4 shows a view from the rear of the protective box applied to the built-in container and, separately, means for an additional blocking system on closing the cover;
Fig. 5 shows the additional blocking system associated with the box, complete with safety lock:
Fig. 6 shows a section of the box on level with the applied additional blocking system;
Fig. 7 shows a front view in elevation of a bolt complete with additional blocking system;
Fig. 8 shows a view according to arrows E-E in Fig. 7; and
Fig. 9 shows an enlarge cross-section according to arrows F-F in Fig. 8.

As shown, the box comprises a box shaped body 11 forming a housing 12 closed at the front by a cover 13 with the interposition of a seal 14. The body 11 can be fixed to a built-in container 15, or to some other support base, and designed to receive at least an electric device to be protected, represented in the example by an electric socket 16. The cover 13 is connected to the body 11 by means of a hinge axis 17 so as to be able to turn between an open position and a closed position of said housing. The cover, when it is closed, is blocked against the body by stop bolts 18 positioned on the opposite sides of the box shaped body, which can be operated like pushbuttons and engage with corresponding recesses provided in the cover as described in detail in the abovementioned application for utility model of the same applicant.

Furthermore, the body 11 and the cover 13 define an opening 19 for the passage of a cable, not shown, like the one for a plug to be inserted in the electric socket 16, and in said opening 19 some elastomer sealing elements 19' are provided to close around said cable as soon as the cover is closed.

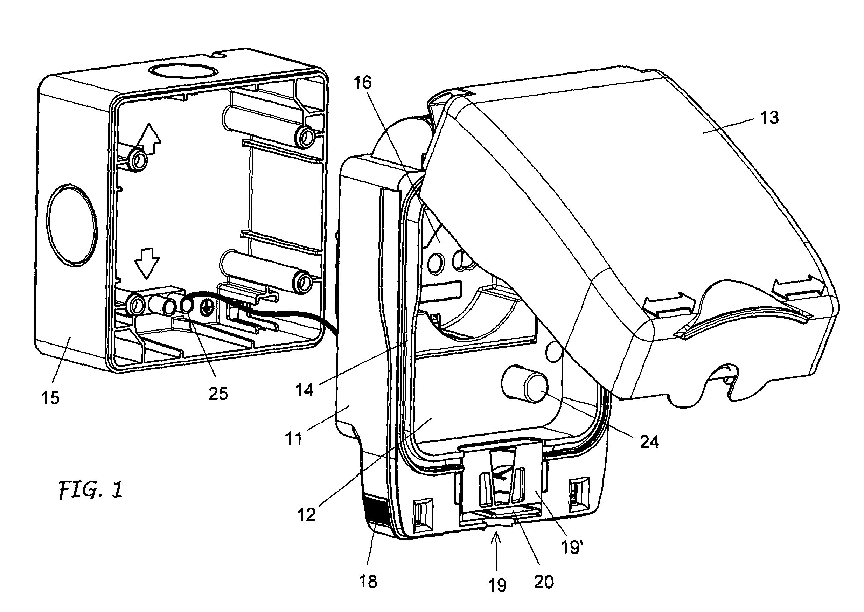

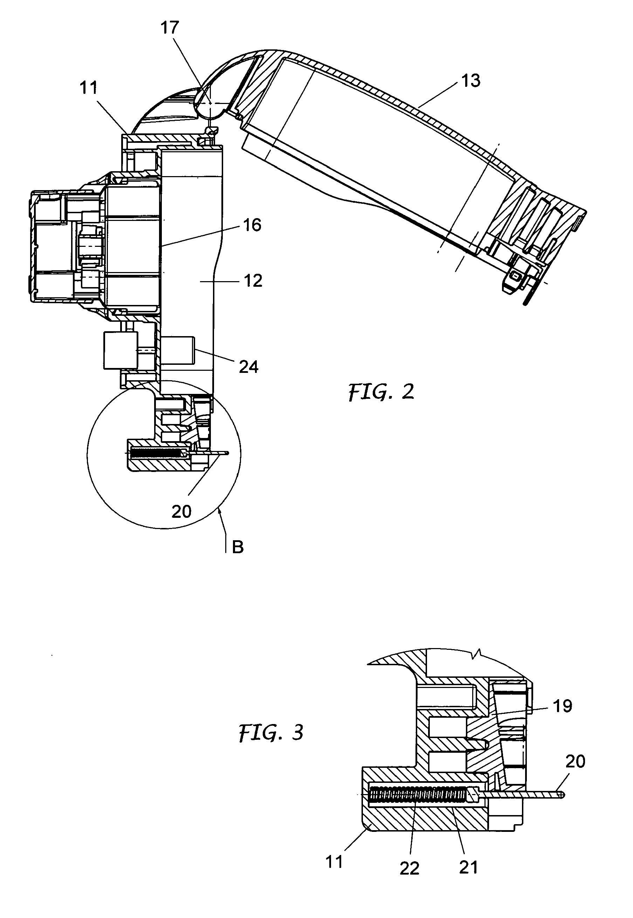

Now, in accordance with the present invention, at least on the part of the body 11, in association with the sealing elements 19' an additional barrier is provided which is oriented and movable perpendicularly to said opening - Figs 1-3. Said barrier is made up of a retractable closing tang 20 that is guided in a slot 21 provided in the body 11 and stressed by a spring 22. This spring normally maintains the closing tang 20 in an active position during which it protrudes out of the opening 19, completely obstructing it. Basically, the tang 20 forms a mechanical closure of the opening 19 between body 11 and a cover 13, that adds to the seal offered by the elastomer elements 19' to ensure a tight seal of the opening 19, consequently of the body, even in the absence of a cable and possible deformations of said elements. On the other hand, the tang 20 retracts into slot 21 in an inactive position opposing said spring 22 as soon as said opening is crossed by the cable, then leaving the sealing function only to the elastomer elements enclosing the cable.

According to a further innovative aspect - Figs. 1 to 2, in body 11 a switch 24 is provided that inserted in the power line of the device installed in the protective box through a connection to a terminal board 25 provided in the built-in container 15, that is, to the base support the protective box is attached to.

The switch 24 can be operated by a member provided inside the cover or by a component of the electric device, in the case of a plug to be connected to the electric socket 16.

The switch can be of any type and it is preset so as to be normally closed for regular feeding of the electric device 16 when the cover is closed (that is when the socket and plug are connected) and feed to the electric device interrupted as soon as the cover is opened. The power, or not, to the electric device can also be shown by means of a luminous warning associated with said switch and possibly visible through a partially transparent cover.

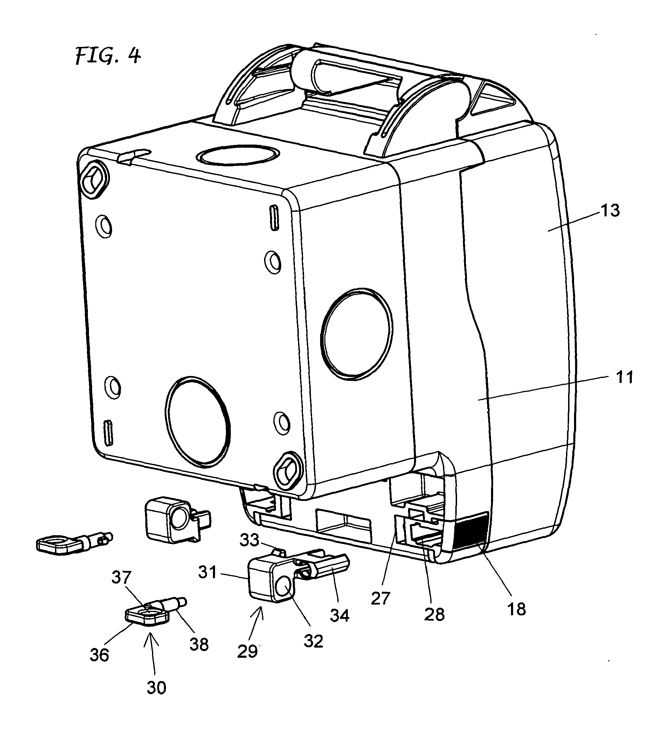

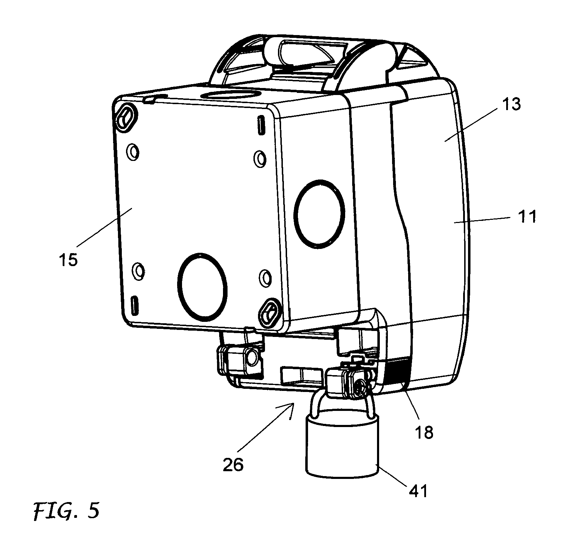

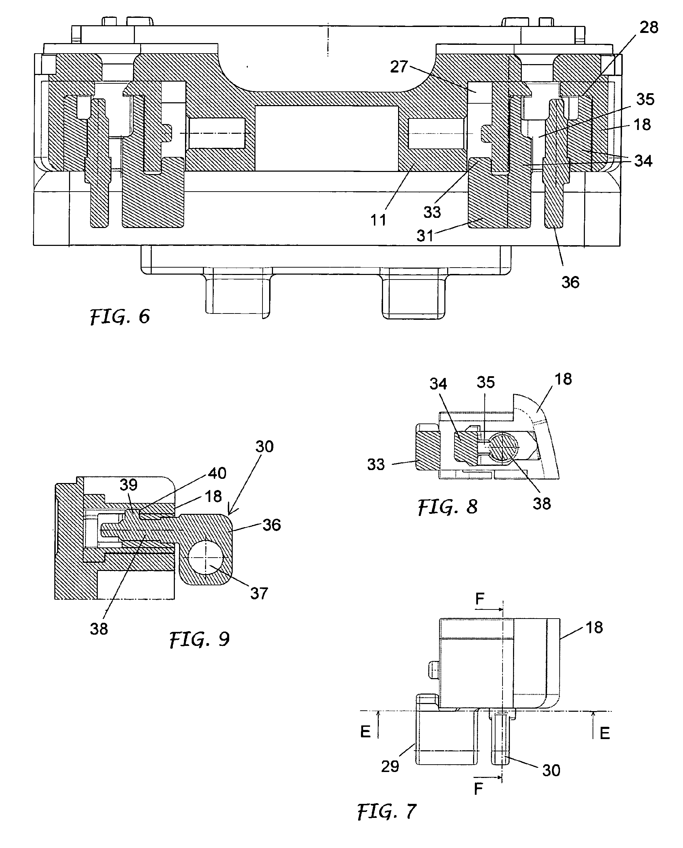

According to a further innovative aspect, the protective box is equipped with an additional blocking system 26 of the cover on closing, a system only enabling the intentional and/or authorised opening of the cover with the availability of an appropriate key. In the illustrated example -Figs. 4-9, this system is associated with one or both the stop bolts 18 of the cover of the body.

Each pushbutton bolt 15 slides between a blocked and a released position in a relative seat 27 provided in the box shaped body 11 and which has a cavity 28 open towards the rear of said body. The additional blocking system 26 comprises a first element 29 and a second element 30 designed to engage either with a bolt 15 or with themselves.

In particular, the first element 29 has a head 31 crossed by a hole 32 from which a tooth 33 and two arms 34 like a fork and where an opening 35 is provided basically in the shape of a keyhole between said two arms. The second element 30 also has a head 36 crossed by a hole 37 and it extends into a shank 38, basically cylindrical, bearing a radial overhang 39 with a key shaped configuration.

The first element 29 of the system 26 is used by making the arms 34 fit into the bolt cavity 15 and the tooth 33 in the sliding seat 27 of the bolt, between the latter and the body 11. Then, the shank 38 with overhang 39 of the second element 30 is inserted deeply in the opening 35 between the two arms of the first element 29 and turned at 90° so that the overhang engages on a level with an internal undercut or shoulder 40 provided in the pushbutton bolt 18 (or in the body 11) in the rear of the first element 29 and the holes in the heads of the two elements 29, 30 which are in line.

With this connection, the tooth of the first element 29 of the system avoids any possible jerking of the bolt thus preventing the release and opening of the cover 13 and at the same time the second element 30, which engages with the undercut or shoulder 40, prevents the first element 29 from sliding out of the cavity of the bolt. Such a connection, and therefore the blocking of the cover when closed, is then stabilised by means of a safety lock 41 that is made to engage the coincident holes 32, 37 of the heads of the two elements 29, 30 of the system and which once closed can be opened by an appropriate key, without which the cover of the protective box cannot be opened.

It should be noted that even if the description above refers to a single electric device, the box according to this invention can also contain several electric devices positioned side by side, for example a socket, a luminous warning and/or other equipment which require protection of the type described above.

## Claims

1. A seal-tight box for the installation of electric devices, comprising a box shaped body designed to house at least one electric device and closed at the front by a cover, where:
- the cover is hinged to said body and turns between an open and a closed position and is equipped with blocking means to keep it closed on the front of the box shaped body,
- said blocking means include at least one stop bolt positioned on the edge of the box shaped body, which can be operated like a pushbutton and which engages with a corresponding recess provided in the cover,
- the box shaped body and the cover form an opening for the passage of a cable, such as that of a plug to be coupled to a socket installed in the box, and
- said box opening is provided with elastomer elements both for sealing the opening when closed and to seal by wrapping around the cable when present,
**characterised in that** at least one auxiliary sealing element (20) is provided to act as a mechanical barrier, oriented and moving perpendicularly to said opening (18).

2. Box for the installation of electric devices according to claim 1, **characterised in** addition by comprising a switch (24) inserted on the feeder line of the electric device (16) installed in the box and operated at least by the cover to enable/disable the feed to said electric device.

3. Box for the installation of electric devices according to claims 1 or 2, **characterised in that** an additional blocking system (26) is provided having a safety lock (41) interacting with at least a stop bolt to close the cover and prevent the latter from opening.

4. Box for the installation of electric devices according to any of the previous claims, wherein said auxiliary sealing element includes at least one retractable closing tang (20) that is guided into a recess (21) provided in the box shaped body (11) and stressed by a spring (22), said spring normally maintaining the closing tang in an active position whereby it projects into the opening (18) completely obstructing it, said tang withdrawing in said seat in the presence of a cable in said opening (18).

5. Box for the installation of electric devices according to any one of the previous claims, wherein said switch is set in said body so as to be normally closed for a regular feed of the electric device when the cover is closed and to interrupt the feeder line of the electric device on the opening of the cover, giving it visibility by means of a luminous warning associated with said switch.

6. Box for the installation of electric devices according to any one of the previous claims, where each bolt (15) slides between a blocked and a released position in a seat provided in the box shaped body (11) and has a cavity (28) open towards the rear of said body, where said additional blocking system (26) comprises
- a first element (29) with a head (31) crossed by a hole (32) and having a tooth(33) and two arms (34) that extend in parallel from said head and an opening (35) between said arms which is basically in the shape of a keyhole,
- a second element (30) with a head (36) crossed by a hole (37) and having a shank (38) with a radial overhang (39) in a key shaped configuration, and wherein
the shank of the first element can be inserted into said seat between the bolt and the body, whereas the arms of the first element are inserted into the cavity of said bolt,
the shank of the second element can be inserted into said opening of the first element and rotated through at least 90° like a key until it engages its overhang with an undercut or internal anti-extract shoulder (40) provided in the bolt and/or body, and
a safety lock can be inserted in the holes of the first and second element to prevent the bolt from operating.
